# EUROPÄISCHE PATENTSCHRIFT

(11) **EP 3 315 346 B1**
(45) Veröffentlichungstag und Bekanntmachung des Hinweises auf die Patenterteilung: **07.10.2020**
(21) Anmeldenummer: 17001729.7
(22) Anmeldetag: 19.10.2017
(51) Int. Cl.: B60L 50/15, B60L 50/30, B60L 50/40, B60L 50/53, B60L 1/00

(54) **ARBEITSGERÄT MIT EINEM ELEKTRISCHEN ANTRIEBSMOTOR**
WORK DEVICE WITH AN ELECTRIC DRIVE MOTOR
OUTIL DE TRAVAIL DOTÉ D'UN MOTEUR D'ENTRAÎNEMENT ÉLECTRIQUE

(30) Priorität: 25.10.2016 DE 102016012753
(43) Veröffentlichungstag der Anmeldung: 02.05.2018
(73) Patentinhaber: Posch, Jürgen, 73035 Göppingen (DE)
(72) Erfinder: Posch, Jürgen, 73035 Göppingen (DE)
(74) Vertreter: Wasmuth, Rolf

(56) Entgegenhaltungen:
- EP-A2- 2 711 233
- WO-A1-2008/140359
- DE-A1-102008 050 553
- US-A1- 2005 235 865
- US-A1- 2012 253 570

## Beschreibung

Die Erfindung betrifft ein Arbeitsgerät mit einem elektrischen Antriebsmotor der im Oberbegriff des Anspruchs 1 angegebenen Gattung.

Aus der DE 10 2008 050 553 A1 ist ein Arbeitsgerät mit einem Verbrennungsmotor bekannt, das ein von dem Verbrennungsmotor antreibbares Hydrauliksystem aufweist. Stellt der Verbrennungsmotor dem System überschüssige Energie bereit, so kann diese im Speichersystem gespeichert werden. Der Speicher ist als elektromechanischer, kinetischer Speicher ausgeführt.

Aus der US 2005/0235865 A1 ist ein Offroad-Fahrzeugsystem bekannt, das ein Speichermanagement-System sowie ein dazugehöriges Energieerfassungs- und Speichersystem umfasst. Das Energie- und Speichersystem ermöglicht eine Aufladung des Speichers über Rekuperation oder überschüssige Energie des Antriebsmotors sowie eine Abgabe dieser Energie an die Verbraucher. Der Speicher kann durch Schwungräder gebildet sein.

Aus der US 2012/0253570 A1 ist ein Energiesystem für einen Bagger bekannt. Das Energiesystem umfasst eine Speichervorrichtung aus Batterien oder Ultrakondensatoren. Die Hydraulikpumpen des Systems können im Betrieb des Arbeitsgerätes über den Hauptgenerator versorgt werden, wobei die Leistungsspitzen über den Speicher abgefangen werden.

Aus der EP 2 711 233 A2 und aus der WO 2008/140359 A1 sind Steuersysteme von Arbeitsmaschinen bekannt, welche zum Betreiben gewisser Arbeitszyklen einer ersten Energiequelle, einem Generator, einer zweiten Energiequelle, ein Speichersystem zuschalten, um Leistungsspitzen in dem entsprechenden Arbeitszyklus abzufangen.

Derartige Arbeitsgeräte werden zur Gewinnung von Rohstoffen, beispielsweise als Zerkleinerungsmaschinen eingesetzt und umfassen einen mechanischen Verbraucher beispielsweise einen Prallbrecher oder dgl. sowie einen elektrischen Antriebsmotor. Der elektrische Antriebsmotor wird über eine Energiequelle mit Energie versorgt und treibt den mechanischen Verbraucher an. Problematisch bei derartigen Arbeitsgeräten ist das Verhalten des elektrischen Antriebsmotors im Anfahrbetrieb oder beim Auftreten von Spitzenlasten. Unter solchen Bedingungen können Elektromotoren das 2- bis 2,5fache des elektrischen Betriebsstromes benötigen, der im Nennlastbetrieb benötigt wird.

Bei der Versorgung des Antriebsmotors mit elektrischer Energie aus einem Generator sind dessen Verbrennungsmotor sowie der Generator selbst so ausgelegt, dass die erforderlichen Anlaufströme und die Spitzenlastströme mittels des Generators bereitgestellt werden können. Da der Generator auf die auftretenden Spitzenbelastungen auszulegen ist, ist er für den gewöhnlichen Nennlastbetrieb überdimensioniert und arbeitet daher oft nicht im Bereich eines optimalen Wirkungsgrades. Somit sind Kraftstoffverbrauch und die daraus resultierenden Betriebskosten erhöht. Eine Auslegung des Generators nach auftretenden Spitzenbelastungen hat auch einen entsprechend hohen Materialaufwand und hohe Investitionskosten zur Folge.

Auch bei einem Anschluss des elektrischen Antriebsmotors des Arbeitsgerätes an ein öffentliches Stromnetz muss der Anschluss auf die hohen Spitzenbelastungen ausgelegt sein und ist daher aufwändig. Darüber hinaus tritt bei elektrischen Leistungsspitzen eine erhebliche Netzbelastung auf. Solche Spitzenbelastungen des Stromnetzes können zu höheren Strombereitstellungskosten für den Betreiber des Arbeitsgerätes führen. Arbeitsgeräte, deren elektrische Antriebsmotoren hohe Belastungsschwankungen im Anfahrbetrieb oder Belastungsspitzen im Arbeitsbetrieb aufweisen, sind konstruktiv stärker auszulegen und daher aufwändig.

Der Erfindung liegt die Aufgabe zugrunde, ein Arbeitsgerät mit einem elektrischen Antriebsmotor derart weiterzubilden, dass der elektrische Antriebsmotor auf eine vorgegebene Antriebsleistung wirtschaftlich ausgelegt ist und dennoch Spitzenbelastungen oberhalb der vorgegebenen Antriebsleistung abgedeckt sind.

Diese Aufgabe wird durch ein Arbeitsgerät mit den Merkmalen des Anspruchs 1 gelöst.

Der elektrische Antriebsmotor des erfindungsgemäßen Arbeitsgeräts ist mit einer vorgegebenen Antriebsleistung aus einer ersten Energiequelle gespeist. Zur Abdeckung einer Spitzenlast ist eine zweite Energiequelle vorgesehen, die ergänzend zum ersten Antriebsmotor eine ergänzende Antriebsleistung zur Verfügung stellt. Die zweite Energiequelle ist dafür vorgesehen, die Leistungsspitzen des elektrischen Antriebsmotors oberhalb der Antriebsleistung abzudecken. Dabei ist die zweite Energiequelle als Energiespeicher ausgebildet. Der Energiespeicher ist zweckmäßig aus der ersten Energiequelle zu laden.

Beim Anfahren des elektrischen Antriebsmotors des mechanischen Verbrauchers des Arbeitsgerätes ist der elektrische Antriebsmotor aus der ersten Energiequelle gespeist; aus dem Energiespeicher wird zusätzlich eine ergänzende Antriebsleistung bereitgestellt. Dabei werden die im Anfahrbetrieb des mechanischen Verbrauchers auftretenden Leistungsspitzen des elektrischen Antriebsmotors oberhalb der Antriebsleistung durch den Energiespeicher abgedeckt.

Im Arbeitsbetrieb kann bei auftretenden Belastungsspitzen des mechanischen Verbrauchers eine zusätzliche Antriebsleistung aus dem Energiespeicher bereitgestellt werden. Der Energiespeicher kann dem elektrischen Antriebsmotor mechanisch oder elektrisch zugeschaltet werden. Hierzu wird die Antriebsleistung der zweiten Energiequelle über eine von der aufgenommenen elektrischen Leistung des Antriebsmotors abhängig betätigte Schalteinrichtung dem Antriebsmotor zugeschaltet. Der Energiespeicher der zweiten Energiequelle deckt dabei im Arbeitsbetrieb die Leistungsspitzen des elektrischen Antriebsmotors oberhalb der Antriebsleistung ab. Die erste Energiequelle muss weder im Anfahrbetrieb noch im Arbeitsbetrieb des Arbeitsgerätes signifikante Leistungsspitzen des elektrischen Antriebsmotors abdecken. Die erste Energiequelle kann für den Nennbetrieb des Arbeitsgerätes ausgelegt werden und fällt daher deutlich kleiner aus als im Stand der Technik. Ein Verbrennungsmotor zum Antrieb eines Generators als erste Energiequelle kann eine kleinere Antriebsleistung aufweisen und mit einem hohen Wirkungsgrad betrieben werden. Bei Anschluss an einem ortsfesten Spannungsnetz als erste Energiequelle können Spitzenströme vermieden werden.

Vorteilhaft ist die erste Energiequelle für den elektrischen Antriebsmotor des erfindungsgemäßen Arbeitsgerätes ein mobiler Generator. Der Generator ist durch einen Verbrennungsmotor, insbesondere einen Dieselmotor, angetrieben. Dadurch kann das Arbeitsgerät losgelöst vom öffentlichen, ortsfesten Spannungsnetz an beliebigen Orten betrieben werden.

Zweckmäßig ist die erste Energiequelle für den elektrischen Antriebsmotor des erfindungsgemäßen Arbeitsgerätes ein öffentliches ortsfestes Spannungsnetz. Alternativ ist die erste Energiequelle für den elektrischen Antriebsmotor ein wahlweise zuschaltbarer mobiler Generator oder das öffentliche, ortsfeste Spannungsnetz.

Der Energiespeicher der zweiten Energiequelle ist ein Schwungradspeicher. Die kurzen Entladungszeiten ermöglichen in Sekunden die Abgabe hoher Antriebsleistungen und damit eine unmittelbare Bereitstellung zusätzlicher Antriebsleistung, um Leistungsspitzen des elektrischen Antriebsmotors oberhalb der Antriebsleistung elektrisch, mechanisch oder hydraulisch abzudecken. In Weiterbildung der Erfindung kann der Energiespeicher der zweiten Energiequelle auch als Batterie, Akku, Hochleistungsakku, Hochleistungskondensator (Ultrakondensator) oder dgl. ausgebildet sein. Insbesondere bei einem Hochleistungsakku oder bei einem Hochleistungskondensator ist innerhalb kürzester Zeit die Aufnahme bzw. die Abgabe einer sehr hohen Leistung gewährleistet.

Das Zuschalten der zweiten Energiequelle über einen Hilfsmotor erfolgt mechanisch. Zweckmäßig sind der Antriebsmotor und der Hilfsmotor über ein Getriebe miteinander verbunden.

In Weiterbildung der Erfindung ist die Schalteinrichtung von einer elektrischen Anlagensteuerung mit einer Rechnereinheit gesteuert. Über die Anlagensteuerung werden insbesondere elektrische Antriebsmotoren, andere Elektromotoren und/oder andere Kleinverbraucher im Arbeitsgerät gesteuert sowie deren Energieversorgung überwacht. Weiter übernimmt die Schalteinrichtung das Zuschalten der verschiedenen Energiequellen, insbesondere der zweiten Energiequelle an den elektrischen Antriebsmotor des Arbeitsgerätes. Die Schalteinrichtung steuert vorteilhaft auch die Rekuperationsphasen und die Einspeisungsphasen des Energiespeichers.

In vorteilhafter Weiterbildung der Erfindung umfasst das Arbeitsgerät ein Fahrwerk, welches insbesondere elektrisch oder hydraulisch angetrieben ist. Das Fahrwerk kann insbesondere auch als Raupenfahrwerk oder als Kettenantrieb ausgebildet sein. Mittels des Fahrwerkes kann das Arbeitsgerät am Einsatzort autark den Standort ändern, ohne auf die Hilfe anderer Zugfahrzeuge angewiesen zu sein. Durch das Fahrwerk wird eine Mobilität des Arbeitsgerätes gewährleistet.

Weitere Merkmale der Erfindung ergeben sich aus den weiteren Ansprüchen, der Beschreibung und der Zeichnung, in der Ausführungsbeispiele der Erfindung dargestellt sind, die im Folgenden anhand der Zeichnung erläutert werden. Es zeigen:
- Fig. 1: eine schematische Darstellung eines Blockschaltbildes eines Arbeitsgeräts,
- Fig. 2: eine schematische Darstellung eines Blockschaltbildes eines hydraulischen Fahrwerks des Arbeitsgerätes nach Fig. 1,
- Fig. 3: eine schematische Darstellung eines Blockschaltbildes eines hydraulischen Fahrwerks nach Fig. 2 mit einer Regelpumpe,
- Fig. 4: ein Diagramm über den zeitlichen Verlauf der Abtriebsleistung des elektrischen Antriebsmotors eines Arbeitsgerätes.

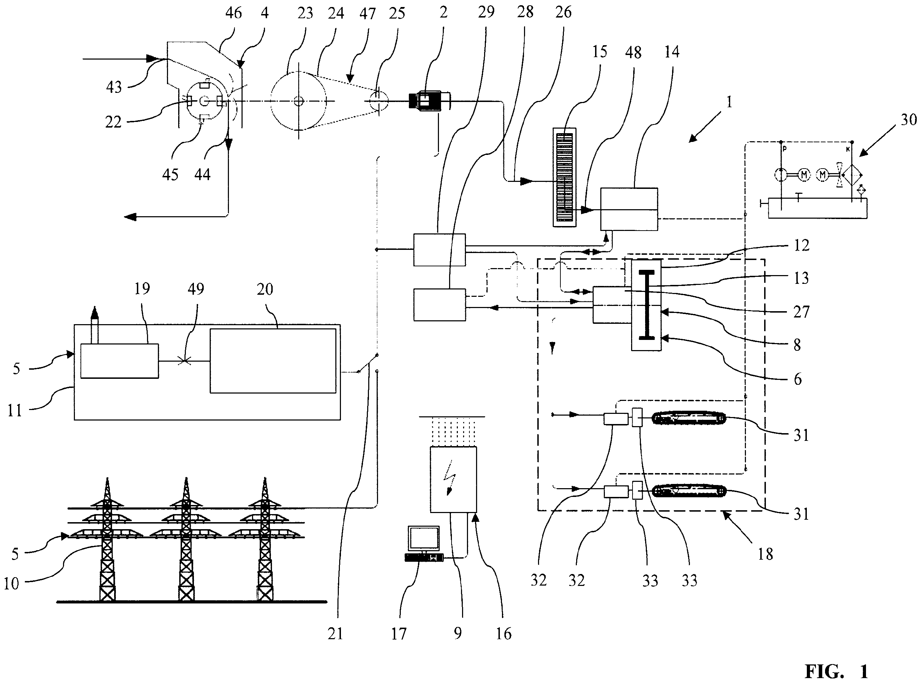

In Fig. 1 ist ein schematisches Blockschaltbild eines Ausführungsbeispiels des erfindungsgemäßen Arbeitsgerätes 1 gezeigt. Das Arbeitsgerät 1 kann ein Arbeitsgerät zum Zerkleinern von Steinen, Holz oder vergleichbarem Material sein. Das Arbeitsgerät 1 umfasst einen elektrischen Antriebsmotor 2, einen mechanischen Verbraucher 4, eine erste Energiequelle 5 und eine zweite Energiequelle 6.

Wie in Fig. 1 gezeigt, ist der mechanische Verbraucher im Ausführungsbeispiel als ein Prallbrecher ausgeführt. Der Prallbrecher umfasst einen Rotor 22 mit einem Durchmesser von z. B. 1300 mm, an welchem mindestens drei Schlagleisten 45, im Ausführungsbeispiel vier Schlagleisten 45, angeordnet sind. Der Rotor 22 ist von einem Gehäuse 46 umgeben, welches im Ausführungsbeispiel z. B. vertikal oberhalb des Rotors 22 einen horizontal verlaufenden Einlass 43 und unterhalb des Rotors 22 einen z. B. vertikal verlaufenden Auslass 44 besitzt. Der Rotor 22 ist über einen Riementrieb 47 mit dem elektrischen Antriebsmotor 2 verbunden. Der Riementrieb umfasst eine Schwungscheibe 23, eine Keilriemenscheibe 25 und einen Keilriemen 24, über welchen die Schwungscheibe 23 und die Keilriemenscheibe 25 verbunden sind. Die Schwungscheibe 23 ist mit dem Rotor 22 und die Keilriemenscheibe 25 mit dem elektrischen Antriebsmotor 2 mechanisch verbunden. Im Betrieb auftretende Ungleichförmigkeiten, insbesondere höherfrequente Ungleichförmigkeiten aufgrund der ungleichförmigen Belastungen des mechanischen Verbrauchers 4 werden vor Erreichen des elektrischen Antriebsmotors 2 durch die elastischen Eigenschaften des Riementriebs 47 geglättet.

Wie in Fig. 1 gezeigt, kann die erste Energiequelle 5 des elektrischen Antriebsmotors 2 ein mobiler Generator 11 und/oder ein öffentliches, ortsfestes Spannungsnetz 10 sein. Der mobile Generator 11 umfasst einen Stromgenerator 20, der von einem Verbrennungsmotor 19, insbesondere einem Dieselmotor angetrieben ist. Im Ausführungsbeispiel umfasst das Arbeitsgerät 2 eine Schaltung 21, durch welche entweder der mobile Generator 11 oder das öffentliche, ortsfeste Spannungsnetz als erste Energiequelle 5 dem Arbeitsgerät 2 zugeschaltet sind.

Die zweite Energiequelle 6 ist im Ausführungsbeispiel als ein Energiespeicher 8 ausgebildet. Der Energiespeicher 8 ist insbesondere ein mechanischer Energiespeicher 12, welcher vorzugsweise als Schwungradspeicher 13 ausgebildet sein kann. Das Arbeitsgerät 2 besitzt eine Elektromaschine 27 mit Frequenzumrichter, welche mit dem Schwungradspeicher 13 mechanisch verbunden ist. Der Schwungradspeicher 13 wird über die Elektromaschine 27 mit Frequenzumrichter aus dem Spannungsnetz des Arbeitsgerätes 2, der ersten Energiequelle 5, geladen oder entladen. Weiter umfasst das Arbeitsgerät 1 einen Bremschopper 28, welcher elektrisch mit der Elektromaschine 27 mit Frequenzumformer verbunden ist. Bei beispielsweise einem Entladevorgang des Schwungradspeichers 13 kann die Netzspannung des Arbeitsgerätes 2 noch vor Erreichen einer Überspannung reduziert werden und die überschüssige Energie im Netz mittels des Bremschoppers 28 über einen Bremswiderstand in thermische Energie umgewandelt werden.

Wie in Fig. 1 gezeigt, umfasst im Ausführungsbeispiel das Arbeitsgerät 1 zweckmäßig einen Hilfsmotor 14, ein Getriebe 15 und eine Sanftanlaufvorrichtung 29. Der Hilfsmotor 14 ist mit dem elektrischen Antriebsmotor 2 über das Getriebe 15 und mechanische Verbindungen 26, 48 verbunden. Der Hilfsmotor 14 kann über die erste Energiequelle 5 und eine zwischengeschaltete Sanftanlaufvorrichtung 29, im Ausführungsbeispiel ein Gleichrichter, mit Energie gespeist werden. Der Hilfsmotor ist über eine elektrische Verbindung und über die Elektromaschine mit Frequenzumformer 27 mit dem Schwungradspeicher 13 verbunden. Daher kann der Schwungradspeicher 13 vom Hilfsmotor 14 entladen oder mit Energie gespeist werden. Wird der Schwungradspeicher direkt über den mobilen Generator 11 oder das öffentliche, ortsfeste Spannungsnetz 10 gespeist, ist im Ausführungsbeispiel die Sanftanlaufvorrichtung 29 zwischengeschaltet, damit beim Anfahren des Schwungrades 13 sowie auch beim Anfahren des Hilfsmotors 14 ein erhöhter Einschaltstrom vermieden wird.

Im Ausführungsbeispiel nach Fig. 1 besitzt das Arbeitsgerät 1 ein elektrisches Fahrwerk 18, welches als Raupenfahrwerk 31 oder als alternatives Kettenfahrwerk ausgebildet sein kann. Das Fahrwerk 18 umfasst Elektromaschinen mit Frequenzumformern 32 und Fahrgetriebe 33, wobei auf jeder Antriebsseite des Fahrwerkes mindestens eine Elektromaschine mit Frequenzumformer 32 und ein Fahrgetriebe 33 angeordnet sind. Die Elektromaschinen mit Frequenzumformer 32 sind im Ausführungsbeispiel von der zweiten Energiequelle 6 mit Energie versorgt, um die bei der Fortbewegung des Arbeitsgerätes entstehenden Belastungsspitzen abzudecken. Alternativ kann auch eine Versorgung des Fahrwerks 18 mit Energie von der ersten Energiequelle 5 vorgesehen sein. Anstelle der Elektromaschinen mit Frequenzumformer 32 können auch Gleichstrommotoren eingesetzt werden.

Im Ausführungsbeispiel enthält das Arbeitsgerät 1 ein Kühlsystem 30, welches insbesondere ein Flüssigkühlsystem ist. Mittels des Kühlsystems 30 können alle elektrischen Motoren und/oder elektrischen Verbraucher oder dgl. gekühlt werden.

Das Arbeitsgerät 1 umfasst eine elektrische Anlagensteuerung 16 mit einer Schalteinrichtung 9. Die Anlagensteuerung 16 ist vorteilhaft von einer Rechnereinheit 17 gesteuert. Ausgehend von der elektrischen Anlagensteuerung 16 werden zweckmäßig alle im Arbeitsgerät 1 vorgesehenen Schaltelemente und elektrischen Verbraucher überwacht und insbesondere gesteuert.

Das Arbeitsgerät 1 wird vorzugsweise über die Rechnereinheit 17 nach dem folgenden Verfahren betrieben.

Im Ausführungsbeispiel wird aus dem Stillstand des Arbeitsgerätes 1 heraus der Verbrennungsmotor 19 des Stromgenerators 20 gestartet und eine entsprechende Betriebsdrehzahl eingestellt. Der Stromgenerator 20 kann über die Kupplung 49 dem Verbrennungsmotor 19 von Beginn an oder erst bei Erreichen einer vorgegebenen Drehzahl des Verbrennungsmotors 19 zugeschaltet werden. Ist der Stromgenerator 20 zugeschaltet, kann die zweite Energiequelle 6 über die Sanftanlaufvorrichtung 29 mit Energie versorgt werden.

Der elektrische Hilfsmotor 14 sowie der elektrische Antriebsmotor 2 sind zunächst über die elektrische Anlagensteuerung 16 von der ersten Energiequelle 5 und der zweiten Energiequelle 6 entkoppelt. Hat der Schwungradspeicher 13 über die Elektromaschine mit Frequenzumformer 27 ausreichend elektrische Energie von der ersten Energiequelle 5 in mechanische Energie umgewandelt und gespeichert, kann der elektrische Antriebsmotor 2 der ersten Energiequelle 5 zugeschaltet werden. Zeitgleich wird die vom Schwungradspeicher 13 aufgenommene mechanische Energie über die Elektromaschine mit Frequenzumformer 27 in elektrische Energie umgewandelt und dem Hilfsmotor 14 zur Verfügung gestellt. Der Hilfsmotor 14 wandelt die elektrische Energie von der zweiten Energiequelle 6 in mechanische Energie um, welche über das Getriebe 15 und die mechanischen Verbindungen 48 und 26 an den elektrischen Antriebsmotor 2 übertragen wird.

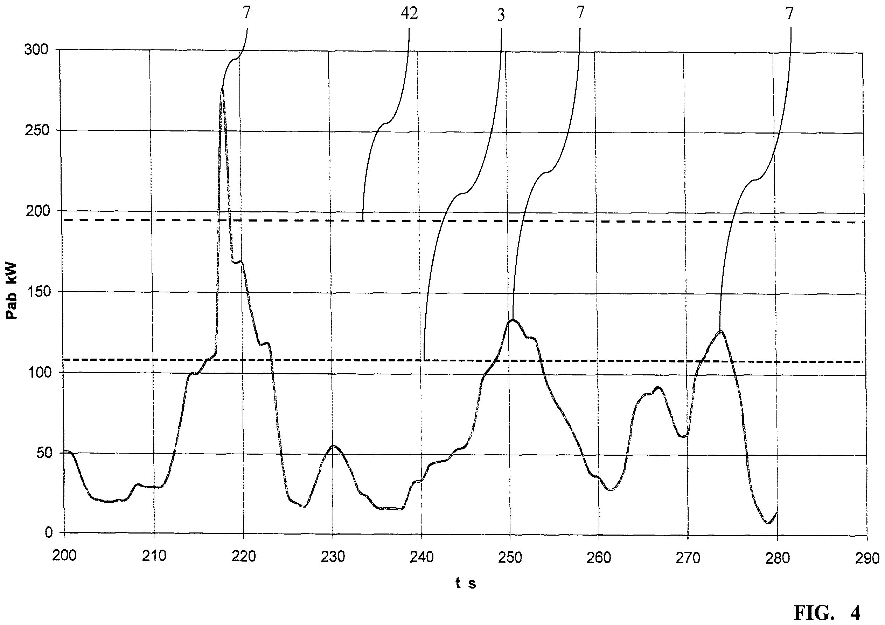

Beim Hochfahren des Rotors 22 über den Riementrieb 47 durch den elektrischen Antriebsmotor 2 entsteht eine Leistungsspitze 7 (Fig. 4), die oberhalb einer Antriebsleistung 3 des elektrischen Antriebsmotors 2 liegt. Durch die zusätzliche Leistungszufuhr vom Hilfsmotor 14, welcher insbesondere vorwiegend durch die zweite Energiequelle 6 gespeist ist, kann die Leistungsspitze 7 oberhalb der Antriebsleistung 3 des elektrischen Antriebsmotors 2 beim Anfahren des Arbeitsgerätes 1 ohne zusätzliche Belastung des elektrischen Antriebsmotors 2 abgedeckt werden.

Hat der Rotor 22 die Betriebsdrehzahl erreicht, kann der Prallbrecher mit Steinen oder ähnlichem Brechgut über den Einlass 43 befüllt werden. Das Brechgut kontaktiert dabei die Schlagleisten 45 des Rotors 22, dessen Außenumfang eine Geschwindigkeit von mindestens 25 m/s beträgt, und wird an die Wände des Gehäuses 46 geschleudert, so dass das Brechgut beim Aufprall zertrümmert. Je höher die Drehgeschwindigkeit des Rotors 22 ist, desto kleiner ist das zertrümmerte Brechgut. Ist das Brechgut ausreichend klein zertrümmert, fällt es aus dem Auslass aus dem Gehäuse und kann über Förderbänder oder dgl. abtransportiert werden.

Belastungsspitzen können beispielsweise dann auftreten, wenn das Brechgut im Gehäuse so groß ist, dass es sich zwischen Rotor 22 und Gehäusewand verkeilt. Mit dem Bruch des verkeilten Brechgutes nimmt die Belastung wieder ab. Aus einer solchen Belastungsspitze resultiert am elektrischen Antriebsmotor 2 eine Leistungsspitze 7 (Fig. 4), welche über eine ergänzende Antriebsleistung des Hilfsmotors 14 aus der zweiten Energiequelle 6 abgedeckt werden kann.

Liegt die vom elektrischen Antriebsmotor 2 abgegebene Leistung unter der vorgegebenen Antriebsleistung 3, kann der elektrische Antriebsmotor 2 über das Getriebe 15 und die mechanischen Verbindungen 26, 48 den Hilfsmotor 14 antreiben. Der Hilfsmotor 14 kann im Generatorbetrieb die vom elektrischen Antriebsmotor 2 zugeführte mechanische Antriebsleistung als elektrische Energie der zweiten Energiequelle 6 zuführen. Die vom Hilfsmotor 14 generierte elektrische Energie wird über die Elektromaschine 27 mit Frequenzumformer und den Schwungradspeicher 13 in mechanische Energie umgewandelt und - im Schwungradspeicher - gespeichert.

Wird der Rotor 22 mittels des elektrischen Antriebsmotors 2 unterhalb der vorgegebenen Antriebsleistung 3 betrieben, kann die zweite Energiequelle 6 auch direkt aus der ersten Energiequelle 5 elektrisch gespeist werden.

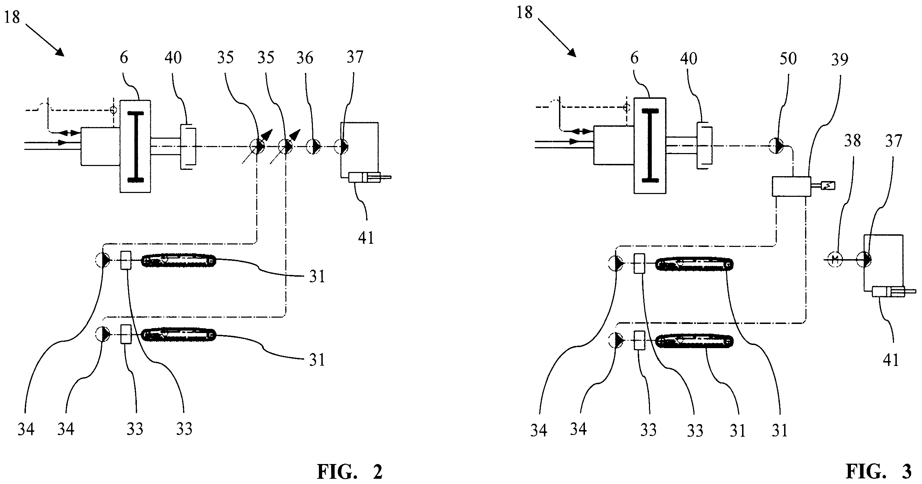

In Fig. 2 ist ein alternatives Ausführungsbeispiel eines Fahrwerkes 18 des Arbeitsgerätes 1 gezeigt, welches hydraulisch angetrieben ist. Das Fahrwerk 18 umfasst eine Kupplung 40, mindestens zwei Regelpumpen 35 und mindestens zwei Hydraulikmotoren 34. Die Regelpumpen 35 sind über die Kupplung 40 mechanisch mit der zweiten Energiequelle 6 verbunden, welche die mechanischen Regelpumpen 35 antreibt. Die Hydraulikmotoren 34 sind über die Regelpumpen 35 angetrieben. Jede Fahrwerkseite des Raupenfahrwerks 31 ist durch einen Hydraulikmotor 34 über ein Fahrgetriebe 33 angetrieben. Zusätzlich umfasst das Fahrwerk eine Hydraulikpumpe 36, mit welcher ein Vorsteuerdruck erzeugt wird, und eine Hydraulikpumpe 37, welche hydraulische Nebenantriebe, wie beispielsweise einen Zylinder 41, antreibt.

In Fig. 3 ist ein weiteres alternatives Ausführungsbeispiel eines Fahrwerkes 18 des Arbeitsgerätes 1 gezeigt, welches hydraulisch angetrieben ist. Das Fahrwerk umfasst eine Kupplung 40, eine Pumpe 50, ein Regelventil 39 und mindestens zwei Hydraulikmotoren 34. Wie auch in Fig. 2, ist im Ausführungsbeispiel die Pumpe 50 über die Kupplung 40 mechanisch mit der zweiten Energiequelle 6 verbunden, welche die Pumpen 50 mechanisch antreibt. Zwischen der Pumpe 50 und den Hydraulikmotoren 34 ist ein Regelventil 39 angeordnet, welches die erforderlichen Drücke an den Hydraulikmotoren 34 regelt. Analog zu Fig. 2 ist jede Fahrwerkseite des Raupenfahrwerks 31 durch einen Hydraulikmotor 34 über ein Fahrgetriebe 33 angetrieben. Hydraulische Nebenantriebe, beispielsweise der Zylinder 41, können über die Hydraulikpumpe 37 angetrieben werden. Der Hydraulikmotor 37 kann hydraulisch, alternativ auch über einen elektrischen Motor 38 angetrieben werden.

In Fig. 4 ist ein Diagramm über den zeitlichen Verlauf der Abtriebsleistung des elektrischen Antriebsmotors 2 des Arbeitsgerätes 1 gezeigt. Bei herkömmlichen Arbeitsgeräten wird die Energiezufuhr nur über eine einzige Energiequelle gedeckt. Der Verlauf der Abtriebsleistung unterliegt hohen Leistungsschwankungen. Um auch dem elektrischen Antriebsmotor 2 bei auftretenden Leistungsspitzen 7 ausreichend Energie bereitstellen zu können, ist die Energiequelle mit einer hohen Antriebsleistung 42 zu dimensionieren.

Der Einsatz einer zweiten Energiequelle 6 im erfindungsgemäßen Arbeitsgerät 1 ermöglicht eine kurzzeitige Bereitstellung hoher zusätzlicher Antriebsleistung. Durch das Zusammenschalten der ersten Energiequelle 5 und der zweiten Energiequelle 6 können die Leistungsspitzen 7 abgedeckt werden. Dadurch kann die erste Energiequelle 5 nach einer geringen Antriebsleistung 3 ausgelegt werden, die einen wirtschaftlicheren Dauerbetrieb des Arbeitsgerätes 1 ermöglicht. Die zweite Energiequelle 6 wird immer dann aus der ersten Energiequelle 5 geladen, wenn der elektrische Antriebsmotor 2 unterhalb einer vorgegebenen Antriebsleistung arbeitet.

## Patentansprüche

1. Arbeitsgerät mit einem elektrischen Antriebsmotor, wobei der Antriebsmotor (2) mit einer vorgegebenen Antriebsleistung (3) einen mechanischen Verbraucher (4) antreibt, und der elektrische Antriebsmotor (2) mit einer vorgegebenen Antriebsleistung (3) aus einer ersten Energiequelle (5) gespeist ist, wobei eine zweite Energiequelle (6) vorgesehen ist, dass die zweite Energiequelle (6) Leistungsspitzen (7) des elektrischen Antriebsmotors (2) oberhalb der Antriebsleistung (3) abdeckt, und die zweite Energiequelle (6) als Energiespeicher (8) ausgebildet ist, und der Energiespeicher (8) aus der ersten Energiequelle (5) zu laden ist, wobei der Energiespeicher der zweiten Energiequelle ein Schwungradspeicher (13) ist, wobei die zweite Energiequelle (6) über eine von der aufgenommenen elektrischen Leistung des Antriebsmotors (2) abhängig betätigte Schalteinrichtung (9) dem Antriebsmotor (2) zugeschaltet ist, wobei der Antriebsmotor (2) und ein Hilfsmotor (14) über ein Getriebe (15) miteinander verbunden sind,
**dadurch gekennzeichnet, dass** der Schwungradspeicher (13) direkt über die erste Energiequelle (5) gespeist werden kann, wobei eine Sanftanlaufvorrichtung (29) zwischen der ersten Energiequelle (5) und dem Schwungradspeicher (13) zur Vermeidung eines erhöhten Einschaltstromes beim Anfahren des Schwungrades (13) sowie beim Anfahren des Hilfsmotors (14) geschaltet ist.

2. Arbeitsgerät nach Anspruch 1,
**dadurch gekennzeichnet, dass** die erste Energiequelle (5) für den elektrischen Antriebsmotor (2) ein mobiler Generator (11) ist.

3. Arbeitsgerät nach Anspruch 1 oder 2,
**dadurch gekennzeichnet, dass** die erste Energiequelle (5) für den elektrischen Antriebsmotor (2) ein öffentliches, ortsfestes Spannungsnetz (10) ist.

4. Arbeitsgerät nach den Ansprüchen 2 und 3,
**dadurch gekennzeichnet, dass** die erste Energiequelle (5) für den elektrischen Antriebsmotor (2) wahlweise zuschaltbar der mobile Generator (11) und das öffentliche, ortsfeste Spannungsnetz (10) ist.

5. Arbeitsgerät nach einem der Ansprüche 1 bis 4,
**dadurch gekennzeichnet, dass** der Energiespeicher (8) der zweiten Energiequelle (6) ein mechanischer Energiespeicher (12) ist.

6. Arbeitsgerät nach einem der Ansprüche 1 bis 5,
**dadurch gekennzeichnet, dass** die Schalteinrichtung (9) von einer elektrischen Anlagensteuerung (16) mit einer Rechnereinheit (17) gesteuert ist.

7. Arbeitsgerät nach einem der Ansprüche 1 bis 6,
**dadurch gekennzeichnet, dass** das Arbeitsgerät (1) ein Fahrwerk (18) umfasst.

8. Arbeitsgerät nach Anspruch 7,
**dadurch gekennzeichnet, dass** das Fahrwerk (18) elektrisch angetrieben ist.

9. Arbeitsgerät nach Anspruch 7,
**dadurch gekennzeichnet, dass** das Fahrwerk (18) hydraulisch angetrieben ist.

## Claims

1. Working implement with an electric drive motor, wherein the drive motor (2) drives a mechanical load (4) with a predetermined drive power (3) and the electric drive motor (2) is fed from a first energy source (5) with a predetermined drive power (3), wherein a second energy source (6) is provided, the second energy source (6) covering power peaks (7) of the electric drive motor (2) above the drive power (3) and the second energy source (6) being designed as an energy store (8) and the energy store (8) being designed for charging from the first energy source (5), wherein the energy store of the second energy source is a flywheel store (13), wherein the second energy source (6) is connected to the drive motor (2) by a switching device (9) depending on the absorbed electric power of the drive motor (2), wherein the drive motor (2) and an auxiliary motor (14) are connected to each other via a gear mechanism (15),
**characterised in that** the flywheel store (13) can be fed directly via the first energy source (5), wherein a smooth start device (29) is connected between the first energy source (5) and the flywheel store (13) in order to avoid an increased starting current when starting the flywheel (13) and when starting the auxiliary motor (14).

2. Working implement according to claim 1,
**characterised in that** the first energy source (5) for the electric drive motor (2) is a mobile generator (11).

3. Working implement according to claim 1 or 2,
**characterised in that** the first energy source (5) for the electric drive motor (2) is a stationary public voltage supply system (10).

4. Working implement according to claims 2 and 3,
**characterised in that** the first energy source (5) for the electric drive motor (2) are the mobile generator (11) and the stationary public voltage supply system (10), which are capable of optional connection.

5. Working implement according to any of claims 1 to 4,
**characterised in that** the energy store (8) of the second energy source (6) is a mechanical energy store (12).

6. Working implement according to any of claims 1 to 5,
**characterised in that** the switching device (9) is controlled by an electric system control (16) with a computer unit (17).

7. Working implement according to any of claims 1 to 6,
**characterised in that** the working implement (1) comprises a chassis (18).

8. Working implement according to claim 7,
**characterised in that** the chassis (18) is driven electrically.

9. Working implement according to claim 7,
**characterised in that** the chassis (18) is driven hydraulically.

## Revendications

1. Appareil de travail avec un moteur d'entraînement électrique, dans lequel le moteur d'entraînement (2) entraîne un consommateur mécanique (4) avec une puissance d'entraînement prédéterminée (3), et le moteur d'entraînement électrique (2) est alimenté avec une puissance d'entraînement prédéterminée (3) depuis une première source d'énergie (5), dans lequel une deuxième source d'énergie (6) est prévue, que la deuxième source d'énergie (6) couvre des pics de puissance du moteur d'entraînement électrique (2) supérieurs à la puissance d'entraînement (3), et la deuxième source d'énergie (6) est réalisée en tant qu'accumulateur d'énergie (8), et l'accumulateur d'énergie (8) est à charger depuis la première source d'énergie (5), dans lequel l'accumulateur d'énergie de la deuxième source d'énergie est un accumulateur à volant d'inertie (13), dans lequel la deuxième source d'énergie (6) est raccordée au moteur d'entraînement électrique (2) par un dispositif de commutation (9) actionné en fonction de la puissance électrique absorbée du moteur d'entraînement (2), dans lequel le moteur d'entraînement (2) et un moteur auxiliaire (14) sont reliés entre eux par une transmission (15),
**caractérisé en ce que** l'accumulateur à volant d'inertie (13) peut être alimenté directement par la première source d'énergie (5), dans lequel un dispositif de démarrage en douceur (29) est monté entre la première source d'énergie (5) et l'accumulateur à volant d'inertie (13) pour éviter un courant de mise en marche accru lors du démarrage du volant d'inertie (13) ainsi que lors du démarrage du moteur auxiliaire (14).

2. Appareil de travail selon la revendication 1,
**caractérisé en ce que** la première source d'énergie (5) pour le moteur d'entraînement électrique (2) est un générateur mobile (11).

3. Appareil de travail selon la revendication 1 ou 2,
**caractérisé en ce que** la première source d'énergie (5) pour le moteur d'entraînement électrique (2) est un réseau électrique public fixe (10).

4. Appareil de travail selon les revendications 2 et 3,
**caractérisé en ce que** la première source d'énergie (5) pour le moteur d'entraînement électrique (2) est le générateur mobile (11) et le réseau électrique public fixe (10), aptes à être raccordés sélectivement.

5. Appareil de travail selon l'une des revendications 1 à 4,
**caractérisé en ce que** l'accumulateur d'énergie (8) de la deuxième source d'énergie (6) est un accumulateur d'énergie mécanique (12).

6. Appareil de travail selon l'une des revendications 1 à 5,
**caractérisé en ce que** le dispositif de commutation (9) est commandé par une commande d'installation électrique (16) comprenant une unité d'ordinateur (17).

7. Appareil de travail selon l'une des revendications 1 à 6,
**caractérisé en ce que** l'appareil de travail (1) comprend un châssis roulant (18).

8. Appareil de travail selon la revendication 7,
**caractérisé en ce que** le châssis roulant (18) est entraîné électriquement.

9. Appareil de travail selon la revendication 7,
**caractérisé en ce que** le châssis roulant (18) est entraîné hydrauliquement.
